# EUROPÄISCHE PATENTANMELDUNG

(11) **EP 0 718 853 A1**
(43) Veröffentlichungstag der Anmeldung: **26.06.1996**
(21) Anmeldenummer: 95119822.5
(22) Anmeldetag: 15.12.1995
(51) Int. Cl.: G21C 17/003, G01N 29/22, G01N 29/26

(54) **Verfahren und Einrichtung zum Ultraschallprüfen eines nur über einen Spalt zugänglichen Bauelementes**

(30) Priorität: 21.12.1994 DE 4445696; 03.03.1995 DE 19507393
(71) Anmelder: ABB Reaktor GmbH, D-68167 Mannheim (DE)
(72) Erfinder: Schreiner, Klaus, D-67346 Speyer (DE); Knieriem, Leonhard, D-64711 Eberbach (DE)
(74) Vertreter: Rupprecht, Klaus, Dipl.-Ing.

(57) **Zusammenfassung**

Zur wiederkehrenden Prüfung der in einem schwer zugänglichen Spalt (5) angeordneten Bauelemente (1) wird ein einen Ultraschallprüfkopf (23) aufnehmender Träger (21) in den Ringspalt (5) eingefahren und der Ultraschallprüfkopf in Fluchtposition mit dem Bauelement gebracht. Anschließend wird der Ultraschallprüfkopf etwa senkrecht zur Einfahrbewegung vom Träger ausgefahren und mit dem Bauelement in Kontakt gebracht. Nach Beendigung des Prüfvorganges wird der Ultraschallprüfkopf wieder in den Träger eingefahren und zur Fluchtposition mit dem nächsten Bauelement gebracht.

## Beschreibung

Die Erfindung betrifft ein Verfahren zum Ultraschallprüfen eines über einen Spalt zugänglichen Bauelementes, das einer den Spalt begrenzenden Wand zugeordnet ist.

Seither wurden die in einem solchen Spalt angeordneten Bauelemente, wie z.B. Befestigungsschrauben, wegen der schweren Zugänglichkeit keiner wiederkehrenden Prüfung unterzogen. Neuere Sicherheitsbestimmungen fordern jedoch bei relevanten technischen Anlagen die Prüfung dieser seither als schlecht zugänglich geltenden Bauelemente.

Es stellt sich die Aufgabe, ein Verfahren und eine Einrichtung zur Prüfung der nur über einen Spalt zugänglichen Bauelemente anzugeben.

Gelöst wird diese Aufgabe erfindungsgemäß durch die im Kennzeichen des Anspruchs 1 angegebenen Merkmale.

Da der Ultraschallprüfkopf vollständig in den Träger eingefahren werden kann, läßt sich der Träger auch bei engen Spalten relativ dick ausführen, so daß die Stabilität gewährleistet ist. Eine solche Stabilität ist auch erforderlich, wenn nach Erreichen der Fluchtposition (Ultraschallprüfkopf und Prüfobjekt befinden sich auf einer Prüfebene) das Ausfahren des Prüfkopfes in Richtung Prüfobjekt durchgeführt wird.

Einrichtungen zur Durchführung des Verfahrens und deren vorteilhafte Ausgestaltungen sind den weiteren Ansprüchen entnehmbar.

Anhand eines Ausführungsbeispiels und der schematischen Fig. 1 bis 5 wird das erfindungsgemäße Verfahren und Einrichtungen zur Durchführung des Verfahrens beschrieben.

Dabei zeigt die
- Fig. 1: in schematischer perspektivischer Darstellung die Kerneinbauten einer kerntechnischen Anlage mit einer Prüfeinrichtung,
- Fig. 1a: einen Teil der Einrichtung nach Fig. 1,
- Fig. 2: eine andere Ausbildung der Anordnung gemäß Fig. 1,
- Fig. 2a: eine Teilansicht der Fig. 2 in Pfeilrichtung II,
- Fig. 3: einen Längsschnitt durch einen Teil der Kerneinbauten und der Prüfeinrichtung,
- Fig. 4: einen Teil der Prüfeinrichtung in einem größeren Maßstab,
- Fig. 5, 5a: einen Ultraschallprüfkopf zur Durchführung des Verfahrens.

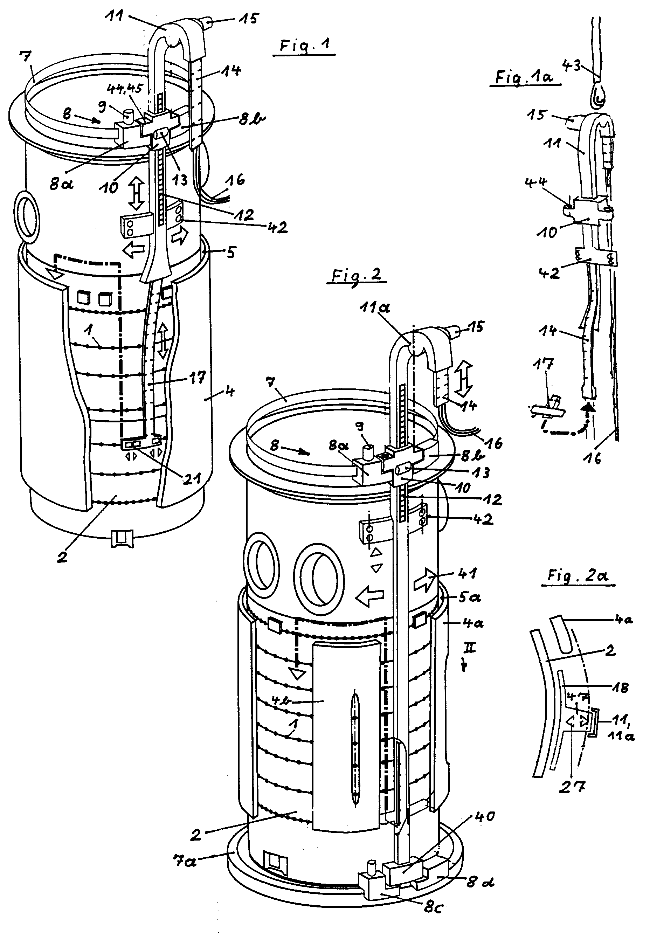

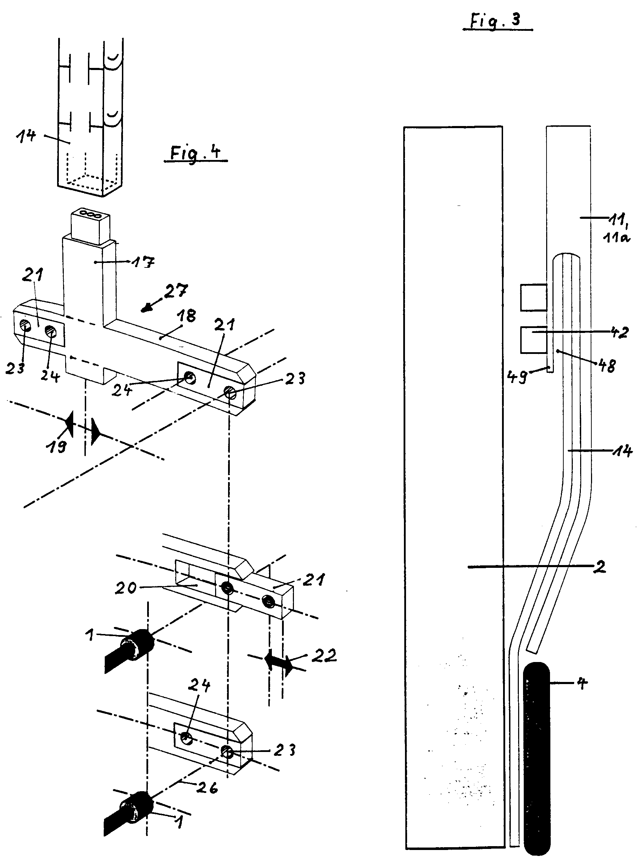

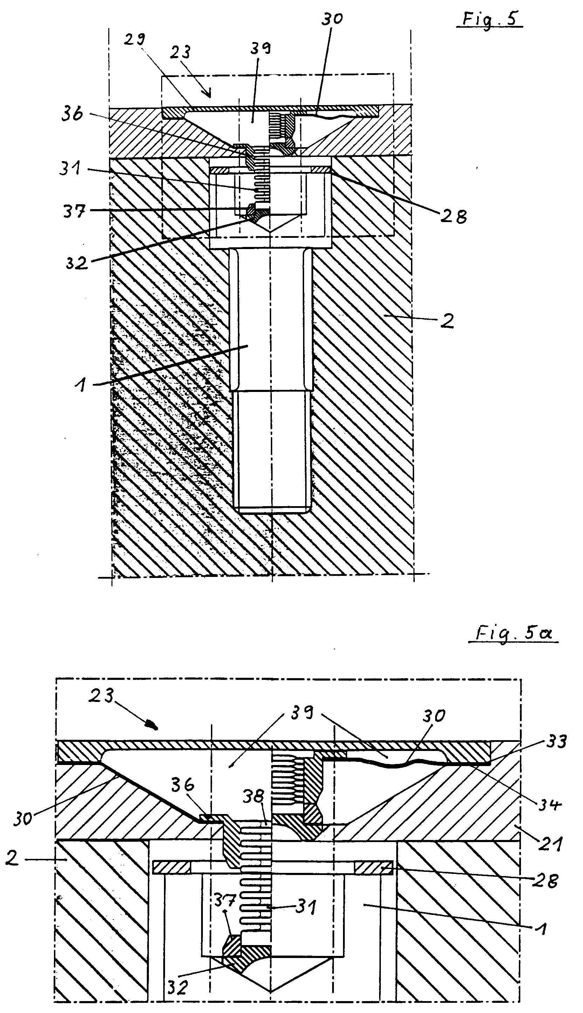

Die Fig. 1 zeigt in perspektivischer Darstellung einen inneren Zylinder 2, der als Kernbehälter zu den Kerneinbauten einer nicht dargestellten kerntechnischen Anlage gehört. Der innere Zylinder 2 ist in seinem unteren Bereich von einem äußeren Zylinder 4 unter Einhaltung eines Ringspaltes 5 umfaßt. Der als thermischer Schild der Kerneinbauten wirkende äußere Zylinder 4 ist als geschlossener Kohlzylinder ausgebildet und gibt in einem Ausbruch den Blick auf den inneren Zylinder 2 und die dort angeordneten Bauelemente 1 frei. Ein derartiges Bauelement bildet bei diesem Ausführungsbeispiel eine in einem größeren Maßstab nach Fig. 5 dargestellte Innensechskantschraube, die in der Wand des inneren Zylinders 2 eingelassen ist. Zum Prüfen eines derartigen Bauelementes ist oberhalb des den äußeren Zylinder 4 in Achsrichtung überragenden inneren Zylinders 2 eine Ringschiene 7 angeordnet, die einen Schlitten 8 trägt, der mit Hilfe eines Antriebes 9 entlang der Ringschiene 7 bewegbar ist. Dem Schlitten 8 ist ein Gleitstück 10 zugeordnet, das von einer Führungsschiene 11 durchsetzt ist. Die Führungsschiene 11 endet oberhalb des äußeren Zylinders 4. Sie weist eine zahnstangenartig ausgebildete Verzahnung 12 auf und ist über einen in die Verzahnung eingreifenden Antrieb 13 relativ zum Schlitten 8 ein vorgebbares Maß bewegbar. Ein elastischer Sondenkörper 14 ist über einen Antrieb 15, der in einem Bogenstück der Führungsschiene 11 angeordnet ist, entlang der Führungsschiene 11 bewegbar. Die Energieversorgung erfolgt über die Kabel 16. Am freien Ende des Sondenkörpers 14 ist ein lösbar mit ihm verbundenes Endstück 17 (Fig. 1a + 4) angeordnet. Der Schlitten 8 besteht aus zwei Teilschlitten 8a, 8b, die über das Gleitstück 10 miteinander verbunden sind. Wie aus Fig. 1a zu erkennen ist, ist das Gleitstück 10 zusammen mit der Führungsschiene 11 und dem Sondenkörper 14 mit Hilfe eines angedeuteten Hebezeuges 43 von den restlichen Schlittenteilen 8a, 8b trennbar. Im zusammengebauten Zustand greifen dem Gleitstück 10 zugeordnete Bohrungen 44 in Zapfen 45 ein, die an den Schlittenteilen 8a, 8b angebracht sind. Mit diesem dreiteilig ausgebildetem Schlitten ist die Einrichtung variabel ausgebildet. Ein mit einer anderen Führungsschiene 11 oder einem anderen Sondenkörper 14 ausgestattetes Gleitstück 10 läßt sich auf einfache Weise einsetzem, so daß sich andere Prüfaufgaben an den Zylindern 2 und 4 durchführen lassen.

Wie aus der in einem größeren Maßstab dargestellten Fig. 3 weiter zu ersehen ist, ist dem Endstück 17 ein Holm 18 zugeordnet, der über einen nicht dargestellten Antrieb in Pfeilrichtung 19 bewegbar ist. Die freien Ende des Holmens 18 weisen eine Führung 20 auf, in der jeweils ein Träger 21 in Pfeilrichtung 22 bewegbar ist. Jeder Träger 21 ist mit einem in Fig. 5 und 5a in einem größeren Maßstab dargestellten Ultraschallprüfkopf 23 ausgerüstet. In einem vorgebbaren Abstand zum Ultraschallprüfkopf 23 weist der Träger eine Kamera 24 auf, wobei Kamera und Ultraschallprüfkopf auf einer parallel zur Längserstreckung des Holmens 18 verlaufenden Symmetrieachse 25 angeordnet sind.

In der Fig. 4 sind auch die Maßnahmen, die zur Anordnung des Ultraschallprüfkopfes auf einer Fluchtlinie 26 erforderlich sind, erkennbar. Nach dem Einfahren des Trägers 21 in den Ringspalt 5 mit den in Fig. 1 beschriebenen Elementen und nach der erfolgten Zentrierung zwischen Kamera 24 und des als Innensechskantschraube ausgebildeten Bauelementes erfolgt eine Verschiebung des Trägers 21 in Pfeilrichtung 22 um das vorbestimmte Abstandsmaß zwischen Kamera und Ultraschallprüfkopf, so daß die aus Fig. 3 ersichtliche präzise Positionierung auf der Fluchtlinie 26 erfolgt ist.

Nach dem diese Fluchtlinienpositionierung erreicht ist, erfolgt gemäß Fig. 2a und 4 das Verfahren des Trägers 21 in Pfeilrichtung 27 bis die das zu prüfende Bauelement 1 aufnehmende Wand des inneren Zylinders 2 vom Träger 21 kontaktet ist. Dazu dient ein fernbedienbarer Stößel 47, der gemäß Fig. 2a gegen die Führungschiene 11, 11a anstellbar ist und dadurch eine Bewegung des Trägers 21 bis zu seiner Anlage an die besagte Wand ermöglicht. Die auf Anrisse zu durchschallende Innensechskantschraube ist mit einer Scheibe 28 gesichert, so daß die Prüfung nur über die Bodenfläche des Innensechskantes erfolgen kann. Wie aus der in einem größeren Maßstab dargestellten Fig. 4a deutlicher zu erkennen ist, besteht der insgesamt mit 23 bezeichnete Ultraschallkopf aus einer im Träger 21 eingelassenen Abdeckplatte 29, einer Membrane 30, einem Faltenbalg 31 und wenigstens einem Ultraschallwandler, der einem Flansch 37 des Faltenbalgs 31 zugeordnet ist. Die ringförmig ausgebildete Membrane 30 ist mit ihrer äußeren Randfläche 33 zwischen der Abdeckplatte 29 und einer Schulter 34 des Trägers 21 eingespannt. Mit ihrer inneren Randfläche 35 ist die Membrane 30 an einer Flanschbuchse 36 des Faltenbalges 31 befestigt. Zwischen dem wenigstens einen Ultraschallwandler tragenden Flansch 37 und der Prüflingsoberfläche ist ein Kontaktstück 32 aus einem elastischen Material angeordnet. Durch eine entsprechende Aussparung im Träger 21 ist zwischen der Abdeckplatte 29 und der Membrane 30 eine Kammer 39 gebildet. Die Kammer 39 einschließlich des über eine Öffnung 38 zugänglichen Innenraums des Faltenbalges 31 ist wahlweise mit Druck (linke Zeichnungshälfte) oder mit einem Vakuum (rechte Zeichnungshälfte) beaufschlagbar. Ist ein Vakuum angelegt, so befindet sich der gesamte Ultraschallprüfkopf 23 analog der rechten Zeichnungshälfte innerhalb des Trägers 21. Diese Lage des Ultraschallprüfkopfes 23 wird bei den Verfahrbewegungen des Trägers 21 innerhalb des Ringspaltes eingenommen und schützt den Ultraschallprüfkopf vor Beschädigungen. Ist die Prüfposition nach Fig. 5, 5a erreicht, so wird die Kammer 39 mit Druck beaufschlagt. Analog der linken Zeichnungshälfte Fig. 5, 5a wird der wenigstens einen Ultraschallwandler tragende Flansch 37 soweit ausgefahren, bis das elastische Kontaktstück 32 an der Bodenfläche des Innensechskantes der Schraube zur Anlage kommt. Faltenbalg 31 und Kammer 39 erlauben eine Ausfahrlänge des Ultraschallprüfkopfes 23, die größer als die Dicke des Trägers 21 sein kann. Da die Membrane und der Faltenbalg keine separaten Dichtungen benötigen, können keine Dichtungsprobleme auftreten. Der Faltenbalg führt zu einer flexiblen und selbstzentrierenden Einrichtung. Nach erfolgter Prüfung wird ein Vakuum an der Kammer 39 angelegt, so daß der Ultraschallprüfkopf 23 wieder die in der rechten Zeichnungshälfte angegebene Position einnimmt. Gemäß Fig. 1 wird mit dem Antrieb 15 und dem Schlitten 8 die nächste zu prüfende Position angefahren und mit Hilfe des Holmens 18 sowie des Trägers 21 feinjustiert.

Das Ausführungsbeispiel nach Fig. 2 zeigt in einer perspektivischen Schemazeichnung einen inneren Behälter 2, der als Kernbehälter zu den Kerneinbauten einer nicht dargestellten kerntechnischen Anlage gehört. Der als thermischer Schild der Kerneinbauten wirkende äußere Zylinder 4a besteht aus mehreren voneinander beabstandeten zylindrischen Teilschalen 4b. Sie begrenzen einen Ringraum 5a, der jedoch aufgrund des Abstandes zwischen den Teilschalen 4b unterbrochen ist. Bei dieser Ausgestaltung erstreckt sich eine Führungsschiene 11a bis unterhalb des äußeren Zylinders 4a. Sie endet auf einem Gleitelement 40, das Schlittenteile 8c, 8d miteinander verbindet, die ihrerseits auf einer Ringschiene 7a abgestützt und entlang derselben bewegbar sind. Der Schlitten 8, das Gleitelement 40 und die diese Bauteile miteinander verbindenden Führungsschiene 11a führen zusammen ihre Verdrehbewegung mit Hilfe der Antriebe 9, 9a aus. Die Führungsschiene 11a nimmt in gleicher Weise wie zu Fig. 1 beschrieben den Sondenkörper 14 auf. Die Verfahrbewegung des Holmens 18 und/oder der Schlitten erfolgt in Pfeilrichtung 41 in den durch die Teilschalen 4b begrenzten Ringraum 5a. Die Prüfung von im Ringraum 5a angeordneten Bauelementen 1, wie z. B. einer Innensechskantschraube, erfolgt auf gleiche Weise wie zu Fig. 1, 4 und 5 beschrieben. Ebenso wie beim Ausführugnsbeispiel nach Fig. 1 läßt sich die Führungsschiene 11a zusammen mit dem Gleitstück 10 und dem Gleitelement 40 von den Schlittenteilen trennen.

Gemäß Fig. 1 und 2 ist der Führungsschiene 11, 11a ein Kalibrierkörper 42 zugeordnet. Der Träger 21 mit dem Ultraschallprüfkopf 23 kann gegenüber dem Kalibrierkörper in Position gebracht und auf Fehlergrößen und dergleichen einjustiert werden.

Die Fig. 3 zeigt eine teilweise als Schlitz 48 ausgebildete Führungsschiene 11, 11a. Ein Lappen 49 der Führungschiene trägt im Bereich des Schlitzes 48 den Kalibrierkörper 42. Der Sondenkörper 14 wird soweit ausgefahren, bis der Träger 21 mit den Ultraschallprüfköpfen in dem Schlitz 48 auf die Höhe des Kalibrierkörpers gelangt ist.

## Patentansprüche

1. Verfahren zum Ultraschallprüfen eines nur über einen Spalt (5, 5a) zugänglichen Bauelementes (1), das einer den Spalt begrenzenden Wand zugeordnet ist, dadurch gekennzeichnet, daß ein einen Ultraschallprüfkopf (23) aufnehmender Träger (21) in den Spalt (5, 5a) eingefahren und der Ultraschallprüfkopf in Fluchtposition mit dem Bauelement (1) gebracht wird, daß der Ultraschallprüfkopf etwa senkrecht zu seiner Einfahrbewegung vom Träger in Richtung Bauelement ausgefahren und das Bauelement beschallt wird und daß nach Beendigung des Prüfvorganges der Ultraschallprüfkopf in den Träger eingefahren und in Fluchtposition mit dem nächsten zu prüfenden Bauelement gebracht wird.

2. Einrichtung zur Durchführung des Verfahrens nach Anspruch 1 bei einem Spalt (5), der zwischen zwei umfangsseitig geschlossenen Zylinder, (2, 4) gebildet ist, wobei der innere Zylinder (2) dem äußeren Zylinder (4) in axialer Richtung betrachtet überragt, dadurch gekennzeichnet, daß eine oberhalb des inneren Zylinders (2) angeordnete Ringschiene (7) einen entlang der Ringschiene verfahrbaren Schlitten (8) aufnimmt, daß ein dem Schlitten (8) zugeordneter Gleitkörper (10) von einer relativ zum Gleitkörper bewegbaren Führungsschiene (11) durchsetzt ist, die oberhalb des äußeren Zylinders (4) endet, daß entlang der Führungschiene ein in den Spalt (5) einfahrbarer Sondenkörper (14) bewegbar ist, der an seinem dem Spalt zugewandten Endstück (17) einen quer zur Bewegungsrichtung des Sondenkörpers verfahrbaren Holmen (18) aufnimmt, der wenigstens an einem Ende den in Achsrichtung des Holmens (18) bewegbaren Träger (21) des Ultraschallprüfkopfes (23) aufnimmt und daß Mittel zur Steuerung der relativ zum Träger (21) verlaufenden Bewegung des Ultraschallprüfkopfes vorgesehen sind.

3. Einrichtung zur Durchführung des Verfahrens nach Anspruch 1, bei einem Spalt (5a), zwischen zwei Zylindern (2, 4) gebildet ist, wobei der innere Zylinder (2) den äußeren Zylinder (4) überragt und wobei der äußere Zylinder aus voneinander beabstandeten zylindrischen Teilschalen (4b) besteht, dadurch gekennzeichnet, daß eine oberhalb des inneren Zylinders (2) angeordnete Ringschiene (7) einen entlang der Ringschiene verfahrbaren Schlitten (8) aufnimmt, daß ein dem Schlitten zugeordneter Gleitkörper (10) von einer relativ zum Gleitkörper bewegbaren Führungssschiene (11a) durchsetzt ist, die bis unterhalb des äußeren Zylinders (4a) erstreckt ist und unter Zwischenschaltung eines Gleitelementes (40) an einer weiteren Ringschiene (7a) abgestützt ist, daß entlang der Führungsschiene (11a) ein in den Spalt (5a) einfahrbarer Sondenkörper (14) bewegbar ist, der an seinem dem Spalt zugewandten Endstück (17) einen quer zur Bewegungsrichtung des Sondenkörpers verfahrbaren Holmen (18) trägt, der wenigstens an einem Ende den in Achsrichtung des Holmens bewegbaren Träger (21) des Ultraschallprüfkopfes aufnimmt und daß Mittel zur Steuerung der relativ zum Träger (21) verlaufenden Bewegung des Ultraschallprüfkopfes vorgesehen sind.

4. Einrichtung nach Anspruch 2 oder 3, dadurch gekennzeichnet, daß die Führungsschiene (11, 11a) oberhalb des äußerenen Zylinders (4, 4a) einen dem inneren Zylinder (2) zugewandten Lappen (49) aufweist, der einen Kalibrierkörper (42) trägt, wobei die Ultraschallprüfköpfe des Holmes (18) gegenüber dem Kalibrierkörper in Position bringbar sind.

5. Einrichtung nach Anspruch 2 oder 3, dadurch gekennzeichnet, daß der Schlitten (8) aus zwei Teilschlitten (8a, 8b) besteht, die über den Gleitkörper (10) miteinander verbunden sind.

6. Einrichtung nach Anspruch 2 oder 3, dadurch gekennzeichnet, daß dem Träger (21) in einem vorgebbaren Abstand zum Ultraschallprüfkopf (23) eine Kamera (24) zugeordnet ist, wobei in Achsrichtung des Holmens (18) betrachtet der Ultraschallprüfkopf und die Kamera auf einer gleichen Symmetrieachse (25) liegen.

7. Einrichtung nach einem der Ansprüche 2 bis 6, dadurch gekennzeichnet, daß der relativ zum Träger (21) bewegbare Ultraschallprüfkopf (23) eine in den Träger (21) eingelassene Abdeckplatte (29) aufweist, die eine äußere Randfläche (33) einer ringförmigen Membrane (30) gegen eine Schulter (34) des Trägers (21) preßt, daß eine innere Randfläche (35) der Membrane (30) mit einer der Abdeckplatte (29) zugewandten Flanschbuchse (36) eines Faltenbalges (31) verbunden ist, daß ein der Abdeckplatte (29) abgewandter Flansch (37) des Faltenbalges (31) wenigstens einen Ultraschallschwinger trägt, und daß die zwischen Membrane (30) und Abdeckplatte (29) gebildete Kammer (39) wahlweise mit Druck beaufschlagbar oder mit einem Vakuum belegbar ist, wobei der Innenraum des Faltenbalges (31) über eine Öffnung (38) mit der Kammer (39) verbunden ist.
